(19)

Europäisches Patentamt

European Patent Office

Office européen des brevets

(11) **EP 1 653 762 A2**

(12) **EUROPEAN PATENT APPLICATION**

(43) Date of publication:
03.05.2006 Bulletin 2006/18

(51) Int Cl.:
*H04Q 7/38* (2006.01)

(21) Application number: 05023674.4

(22) Date of filing: 28.10.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 28.10.2004 KR 2004086569

(71) Applicants:
• **Samsung Electronics Co., Ltd.**
**Suwon-si, Gyeonggi-Do (KR)**
• **Korea Advanced Institute of Science and Technology**
**(KAIST)**
**Daejon (KR)**

(72) Inventors:
• **Kang, Tae-Sung**
**Yusong-gu**
**Daejon (KR)**
• **Kim, Hyung-Myung**
**Yusong-gu**
**Daejon (KR)**
• **Oh, Hye-Ju**
**Yusong-gu**
**Daejon (KR)**

• **Jang, Yun-Jik**
**Yusong-gu**
**Daejon (KR)**
• **Ahn, Woo-Geun**
**Yusong-gu**
**Daejon (KR)**
• **Park, Seung-young**
**Yeongtong-gu**
**Suwon-si**
**Gyeonggi-do (KR)**
• **Lee, Ok-Seon**
**Yeongtong-gu**
**Suwon-si**
**Gyeonggi-do (KR)**
• **Lee, Yeon-Woo**
**Yeongtong-gu**
**Suwon-si**
**Gyeonggi-do (KR)**

(74) Representative: **Grünecker, Kinkeldey, Stockmair & Schwanhäusser**
**Anwaltssozietät**
**Maximilianstrasse 58**
**80538 München (DE)**

(54) **Apparatus and method for dynamically allocating resources in an OFDM communication system**

(57) An orthogonal frequency division multiple access (OFDMA) communication system. The system has a plurality of cells, divides an entire frequency band into a plurality of subcarrier bands in each cell, and has subchannels that are a set of a preset number of subcarrier bands, respectively. Interference from neighbor cells of the plurality of cells is predicted. A time interval in which interference is absent and a time interval in which the interference is present are classified according to the interference predicted from the neighbor cells. Transmit power is equally distributed and allocated to subchannels capable of being allocated in the time interval in which the interference is absent. Transmit power is adjusted and allocated for the subchannels capable of being allocated such that inference to the neighbor cells does not occur in the time interval in which the interference is present.

FIG.11

**Description**

The present invention generally relates to a communication system using an Orthogonal Frequency Division Multiple Access (OFDMA) (hereinafter, referred to as an OFDMA communication system) scheme, and more particularly to an apparatus and a method for dynamically allocating resources according to a channel state.

Research is being conducted on a fourth-generation (4G) communication system serving as a next generation communication systems for providing users with services based on various qualities of service (QoS) at a high transmission rate. Accordingly, research is being conducted to develop a communication system capable of ensuring mobility and Quality of Service (QoS) in a wireless Local Area Network (LAN) system, on ensuring a relatively high transmission rate, and on a wireless Metropolitan Area Network (MAN) system serving as a 4G communication system, such that high-speed services can be supported.

Further research is being conducted to apply Orthogonal Frequency Division Multiplexing (OFDM) and Orthogonal Frequency Division Multiple Access (OFDMA) schemes to a physical channel of the wireless MAN system such that a broadband transmission network can be supported. When the OFDM/OFDMA scheme is applied to the wireless MAN system, a physical channel signal can be transmitted using a plurality of subcarriers and therefore high-speed data can be transmitted.

On the other hand, a cellular communication system has different channel characteristics according to a distance from the center of a cell (i.e., according to a cell center area or a cell boundary area). When the distance apart from the cell center increases, interference from neighbor cells increases. The interference from the neighbor cells affects degradation of the communication performance. Various schemes such as Dynamic Channel Allocation (DCA), power control and so on have been proposed to compensate for the degradation of the communication performance due to the interference from the neighbor cells.

The DCA scheme exploits a type of interference avoidance scheme such that the same channel cannot be simultaneously used between the neighbor cells in a communication system using Frequency Division Multiple Access (FDMA) (hereinafter, referred to as an FDMA communication system) or a communication system using Time Division Multiple Access (TDMA) (hereinafter, referred to as a TDMA communication system).

Because the power control scheme exploits a spread spectrum scheme in a communication system using Code Division Multiple Access (CDMA) (hereinafter, referred to as a CDMA communication system), it is based on received power or a signal to interference-plus-noise ratio (SINR) of a received signal. When the power control scheme is exploited, QoS to be provided to all users, i.e., user terminals, receiving voice services can be satisfied with respect to the voice services. However, because it is difficult for the power control scheme to provide a high throughput for data services, there is a problem in that QoS to be provided to all user terminals cannot be satisfied.

On the other hand, a communication system using CDMA 1x evolution data only (EVDO) (hereinafter, referred to as a CDMA 1x EVDO communication system) can provide a relatively high throughput using a link adaptation scheme such as an Adaptive Modulation and Coding (AMC) scheme Here, the AMC scheme can improve the performance of the entire cell by determining a modulation scheme and a coding scheme according to links between a base station and user terminals, i.e., channel states.

On the other hand, the OFDMA communication system the AMC scheme and the DCA scheme. When the OFDMA communication system uses the AMC scheme, a high throughput can be achieved. However, when a user terminal is located in the cell boundary area of a cellular structure the AMC scheme cannot ensure QoS. That is, because a channel state is relatively poor in a cell boundary area, the AMC scheme may have to be used at a low coding rate. However, when the coding rate is reduced, the throughput is also reduced, such that it is difficult for QoS to be ensured in a user terminal.

The OFDMA system can exploit the DCA scheme for the interference avoidance because it has FDMA characteristics. Moreover, the OFDMA system can exploit a scheme of interference averaging using frequency hopping (FH). Both the AMC and DCA schemes do not make use of all of the systems available resources in the OFDMA communication system but use only one-half or less of the systems available resources, such that the high throughput cannot be provided. Because the effect of interference from the neighbor cells is still present even when the interference averaging is used, the throughput is lowered in the cell boundary area of the OFDMA communication system.

When subchannels are simultaneously allocated in a serving cell and neighbor cells of the OFDMA communication system, subchannels allocated in the neighbor cells cannot be recognized in the serving cell, such that the interference to each subchannel allocated in the serving cell cannot be estimated. Here, the term "subchannel" indicates a channel configured by a preset number of successive subcarriers. Accordingly, to remove the effect of interfering with a subchannel of the serving cell due to the subchannel allocation in the neighbor cells, an amount of interference of each subchannel from the neighbor cells must be estimated.

To estimate the interference of each of the subchannels, a staggered frame scheme has been proposed. The staggered frame scheme uses a reservation for subchannel allocation for a plurality of frames that are sequentially staggered between neighbor cells according to a token ring method in the staggered frame structure, such that the interference due to subchannels allocated in the neighbor cells can be predicted.

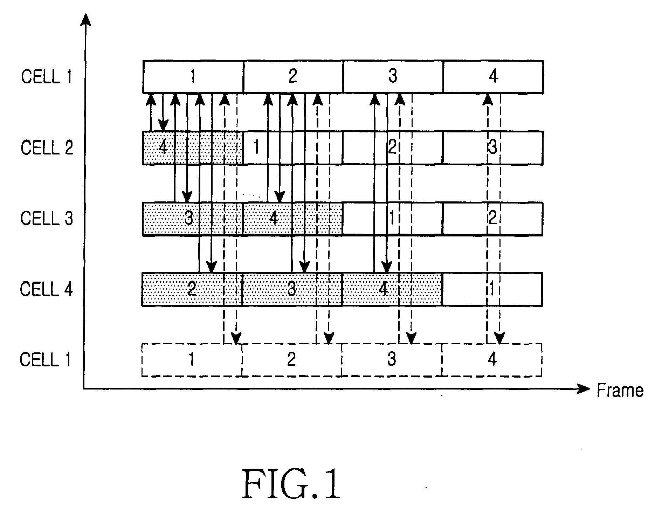

The staggered frame structure will be described with reference to FIG. 1. which illustrates the staggered frame structure of a conventional cellular communication system. The staggered frame structure is based on a unit of four base stations (BSs), i.e., cells. Four frames configure one super frame. The super frame of the second cell (Cell 2) begins at the second frame (Frame 2) of the super frame of the first cell (Cell 1). The super frame of the third cell (Cell 3) begins at the third frame (Frame 3) of the super frame of the first cell. The super frame of the fourth cell (Cell 4) begins at the fourth frame (Frame 4) of the super frame of the first cell. According to the above-described staggered frame scheme, subchannel allocation is performed for the four frames, i.e., the supper frame, in each cell. In this case, each cell transmits a reference signal, e.g., a pilot signal, in a control time slot, through an allocated subchannel. Each of the user terminals to which each cell provides service measures SINRs of pilot signals transmitted through subchannels of the neighbor cells and then feeds back a result of the measurement to each cell. Then, a subchannel unallocated to the neighbor cells is allocated in each cell, such that interference due to the subchannel allocation in the neighbor cells can be reduced or entirely removed.

However, when the staggered frame structure as illustrated in FIG. 1 is used, the user terminal must feed back an SINR value of a subchannel allocated in an associated cell. Consequently, there is a problem in that significant uplink overhead occurs. Moreover, when the staggered frame structure is used, a subchannel allocated in the neighbor cells is not allocated in an associated cell. In other words, only a subchannel unallocated in the neighbor cells is allocated to a user terminal in an associated cell. Accordingly, because subchannels capable of being allocated are limited, QoS for a user terminal located in the cell boundary area can be ensured, but available resources can be reduced to one-half or less, such that the total throughput can be lowered.

On the other hand, a multi-user multiplexing system has different channel characteristics according to each user's location. Because each channel differently varies with time or frequency, the multi-user multiplexing system can select a suitable user according to time or frequency, allocate resources to the selected user, and improve the system's capacity. This is called a multi-user diversity scheme. After the AMC scheme was proposed, various schemes have been proposed which combine the multi-user diversity scheme and the AMC scheme, provide a relatively low bit error rate (BER) and acquire a relatively large throughput gain. Here, the multi-user diversity scheme is a type of selection diversity. The multi-user diversity scheme compares channel gains or SINRs of user terminals and allocates resources, for example, a time slot or subchannel, to a user terminal with a relatively large channel gain. The multi-user diversity has characteristics in which the throughput gain increases as the number of user terminals increases.

In the downlink of the recent CDMA communication system, it has been verified that a time slot allocation scheme based on a Time Division Multiplexing (TDM) scheme has better performance than a code allocation scheme based on Code Division Multiplexing (CDM). This is because code orthogonality is destroyed in a fading channel. Specifically, it has already been verified that the throughput increases due to the multi-user diversity gain when a time slot is adaptively allocated according to channel state. When a time slot is adaptively allocated according to a plurality of user terminals, a user terminal with the largest channel gain is assigned the time slot. As described above, the total throughput can be improved using the multi-user diversity scheme. Using a proportional fair scheduling scheme with the above-described characteristics, the CDMA 1x EVDO communication system significantly improves the downlink capacity.

Schemes have been proposed for allocating subchannels to the plurality of user terminals in a subchannel unit using the AMC scheme in the OFDMA communication system. Specifically, there has been proposed a Margin Adaptive (MA) scheme for setting a conditional equation for a target throughput of each user terminal and minimizing the total transmit power in the OFDMA communication system. When the target throughput is set by the conditional equation, data with a Constant Bit Rate (CBR) such as realtime data is efficiently transmitted, but data with a Variable Bit Rate (VBR) such as non-realtime data is inefficiently transmitted.

To maximize the total throughput for the total transmit power, a scheme for allocating a subchannel to a user terminal with the largest channel gain, i.e., best channel selection scheme, and allocating transmit power using a water-filling scheme have been proposed. A scheme for allocating the same transmit power to each user terminal has been verified to have almost equal performance to the water-filling scheme. However, there is a problem in that the above-described best channel selection scheme never considers the QoS assurance for each user terminal and the burstness of data such as packet data.

It is the object of the present invention to provide an apparatus and method for dynamically allocating resources in an Orthogonal Frequency Division Multiple Access (OFDMA) communication system.

This object is solved by the subject matter of the independent claims.

Preferred embodiments are defined by the subject matter of the dependent claims.

It is an aspect of the present invention to provide a subchannel allocation apparatus and method that can minimize interference between neighbor cells in an OFDMA communication system.

It is another aspect of the present invention to provide a power control apparatus and method that can minimize interference between neighbor cells in an OFDMA communication system.

It is yet another aspect of the present invention to provide a scheduling apparatus and method that can maximize the data throughput while satisfying Quality of Service (QoS) requested by a mobile station subscriber (MSS) in an OFDMA communication system.

The above object and other aspects of the present invention can be achieved by an apparatus for allocating resources in a serving cell of an OFDMA communication system a plurality of cells and dividing an entire frequency band into a plurality of subcarrier bands in each cell and having subchannels that are a set of a preset number of subcarrier bands, respectively, the apparatus including a base station (BS) for predicting interference from neighbor cells of the plurality of cells, classifying a time interval in which interference is absent and a time interval in which the interference is present according to the interference predicted from the neighbor cells, equally distributing and allocating transmit power to subchannels capable of being allocated in the time interval in which the interference is absent, and adjusting and allocating transmit power for the subchannels capable of being allocated transmit power such that inference to the neighbor cells is minimized or non-existant in the time interval in which the interference is present and a plurality of user terminals for receiving a signal transmitted from the BS and transmitting a signal to interference-plus-noise ratio (SINR) of the received signal to the BS.

The above object and other aspects of the present invention can also be achieved by an apparatus for allocating resources in a serving cell of an OFDMA communication systemhaving a plurality of cells, dividing an entire frequency band into a plurality of subcarrier bands in each cell, and have subchannels that are a set of a preset number of subcarrier bands, respectively, the apparatus including a base for selecting user terminals satisfying preset conditions to which subchannels can be allocated, from user terminals having a minimum throughput from among a plurality of user terminals in an arbitrary time interval, and allocating the subchannels to the selected user terminals and the plurality of user terminals for receiving a signal transmitted from the BS and an SINR of the received signal to the BS.

The above object and other aspects of the present invention can also be achieved by a method for allocating resources in a serving cell of an OFDMA communication system, wherein the system having a plurality of cells, dividing an entire frequency band into a plurality of subcarrier bands in each cell and having subchannels that are a set of a preset number of subcarrier bands, respectively, the method including predicting interference from neighbor cells of the plurality of cells classifying a first time interval in which interference is absent and a second time interval in which the interference is present according to the interference predicted from the neighbor cells equally distributing and allocating transmit power to subchannels capable of being allocated in the time interval in which the interference is absent and adjusting and allocating transmit power for the subchannels capable of being allocated such that inference to the neighbor cells the second time interval.

The above object and other aspects of the present invention can also be achieved by a method for allocating resources in a serving cell of an OFDMA communication system, the system having a plurality of cells, dividing an entire frequency band into a plurality of subcarrier bands in each cell, and having subchannels that are a set of a preset number of subcarrier bands, respectively, the method including selecting user terminals satisfying preset conditions to which subchannels can be allocated, from user terminals having a minimum throughput among a plurality of user terminals in an arbitrary time interval and allocating the subchannels to the selected user terminals.

The present invention will be more clearly understood from the following detailed description taken in conjunction with the accompanying drawings, in which:

FIG. 1 illustrates a staggered frame structure of a conventional cellular communication system; FIG. 2 illustrating mutual interference between cells and an area in which a subchannel can be allocated in an OFDMA communication system in accordance with an embodiment of the present invention;

FIG. 3 is a block diagram illustrating an adaptive multi-user scheduling (AMS) scheme in accordance with an embodiment of the present invention;

FIG. 4 is a block diagram illustrating a structure of a transmitter for performing the AMS scheme in accordance with an embodiment of the present invention;

FIG. 5 is a graph illustrating a signal-to-noise ratio (SNR) gain according to the number of scheduled user terminals in accordance with an embodiment of the present invention;

FIG. 6 is a graph illustrating characteristics of the minimum throughput according to the number of scheduled user terminals in accordance with an embodiment of the present invention;

FIG. 7 is a graph illustrating characteristics of a fairness factor according to the number of scheduled user terminals in accordance with an embodiment of the present invention;

FIG. 8 is a graph illustrating characteristics of a signal to interference-plusnoise ratio (SINR) distribution and the optimum number $m^*$ of user terminals according to the total number of user terminals in accordance with an embodiment of the present invention;

FIG. 9 is a graph illustrating characteristics of the minimum throughput compared between a conventional optimum subchannel allocation scheme and a proposed AMS scheme in accordance with an embodiment of the present invention;

FIG. 10 is a graph illustrating throughput allocation when ratios of data amounts requested by user terminals are different in accordance with an embodiment of the present invention;

FIG. 11 is a graph illustrating a relation between the minimum threshold SINR and a frame outage probability in a multi-cell environment in accordance with an embodiment of the present invention;

FIG. 12 is a graph illustrating a performance comparison between a conventional subchannel transmit power allocation scheme and a proposed subchannel transmit power allocation scheme in accordance with an embodiment of the present invention; and

FIG. 13 is a flow chart illustrating a process for scheduling, subchannel allocation, and subchannel transmit power allocation in accordance with an embodiment of the present invention.

Preferred embodiments of the present invention will be described in detail herein below with reference to the accompanying drawings. In the following description, only parts necessary to understand the operation of the present invention will be described, and other parts are omitted for clarity and conciseness.

The present invention discloses a dynamic resource allocation apparatus and method for minimizing interference between neighbor cells and performing scheduling and subchannel allocation adaptive to a channel state while satisfying fairness between user terminals and Quality of Service (QoS) levels requested by the user terminals in a communication system using an orthogonal frequency division multiple access (OFDMA) scheme (hereinafter, referred to as an OFDMA communication system). That is, the present invention proposes an apparatus and method for maximizing the throughput while allocating subchannels and transmit power such that interference between neighbor cells is minimized in the OFDMA communication system. Here, the term "subchannel" indicates a channel configured by a preset number of subcarriers. In the following description, the OFDMA communication system has a cellular structure. One base station (BS) covers one cell and provides service. Alternatively, the BS may cover a plurality of cells and provide service. For the sake of clarity, it is assumed that one BS covers one cell.

Before the present invention is described, the conventional staggered frame structure described above in relation to FIG. 1 is as follows.

As illustrated in FIG. 1, four frames configure a single super frame. The super frame of the second cell (Cell 2) begins at the second frame (Frame 2) of the super frame of the first cell (Cell 1). The super frame of the third cell (Cell 3) begins at the third frame (Frame 3) of the super frame of the first cell. The super frame of the fourth cell (Cell 4) begins at the fourth frame (Frame 4) of the super frame of the first cell. Here, the first frame is a reference frame for subchannel allocation in each cell. The first frame is allocated in the cells at intervals of one frame, and a token-ring method is used to perform the subchannel allocation in a unit of four frames.

FIG. 1 illustrates interference to each frame when a subchannel is allocated for four frames in the first cell. That is, shadowed frames of the frames allocated in the second to fourth cells indicate frames for which subchannels are allocated within previous super frames in the second to fourth cells.

Subchannels allocated for previous super frames in the second to fourth cells are present in relation to the first frame for which a subchannel is allocated in the first cell. Accordingly, when a subchannel is allocated which is the same as the subchannels allocated for the previous super frames in the second to fourth cells, interference due to the subchannels allocated for the previous super frames in the second to fourth cells occurs. Of course, interference due to the subchannel allocated for the first frame of the current super frame in the first cell occurs also in the second to fourth cells during the previous super frame.

Subchannels allocated for previous super frames in the third and fourth cells are present in relation to the second frame for which a subchannel is allocated in the first cell. Accordingly, when a subchannel is allocated which is the same as the subchannels allocated for the previous super frames in the third and fourth cells, interference due to the subchannels allocated for the previous super frames in the third and fourth cells occurs. Of course, interference due to the subchannel allocated for the second frame of the current super frame in the first cell occurs also in the third and fourth cells.

A subchannel allocated for a previous super frame in the fourth cell is present in relation to the third frame for which a subchannel is allocated in the first cell. Accordingly, when a subchannel is allocated which is the same as the subchannel allocated for the previous super frame in the fourth cell, interference due to the subchannel allocated for the previous super frame in the fourth cell occurs. Of course, interference due to the subchannel allocated for the third frame of the current super frame in the first cell also occurs in the fourth cell.

Because the subchannels allocated for the previous super frames in the neighbor cells are not present in relation to the fourth frame for which a subchannel is allocated in the first cell, interference due to subchannel allocation in the neighbor cells does not occur.

As described above, interference to frames of the super frame occurs or does not occur according to subchannel allocation in the neighbor cells. Frames in which interference occurs, i.e., the first to third frames, are referred to as interfered frames. A frame in which interference does not occur, i.e., the fourth frame, is referred to as an interference-free frame.

On the other hand, interference to subchannels allocated for the previous super frames in the second to fourth cells can be predicted in relation to the first to third frames in the first cell and transmit power can be allocated such that the interference is minimized. Moreover, interference from the subchannels allocated for the previous super frames in the second to fourth cells can be estimated in relation to the first to third frames in the first cell. Accordingly, relatively low transmit power is allocated to subchannels allocated for the first to third frames in the first cell and relatively high interference affects the first cell. For example, interference associated with the second to fourth cells is considered in the first frame of the first cell. Interference associated with the third and fourth cells is considered in the second frame of the first cell. Interference associated with the fourth cell is considered in the third frame of the first cell. Accordingly, transmit power for the first to third frames satisfies the following condition wherein the transmit power of the First Frame is less than the transmit power of the Second Frame which is less than the transmit power of the Third Frame, and an amount of interference has a relationship in which interference of the First Frame is greater than interference of the Second Frame which is greater than interference of the Third Frame.

Because it can be assumed that interference associated with a neighbor cell does not occur in the fourth frame, the maximum transmit power can be allocated to a subchannel allocated for the fourth frame in the first cell. This is because transmit power is allocated in the second to fourth cells using information about a subchannel allocated for the fourth frame in the first cell such that interference to the first cell does not occur when a subchannel is allocated for the fourth frame in the first cell. Even when a subchannel to be transmitted through the fourth frame is assigned the maximum transmit power, interference from the neighbor cells does not occur, such that a relatively high signal-to-interference-plus-noise-ratio (SINR) is provided.

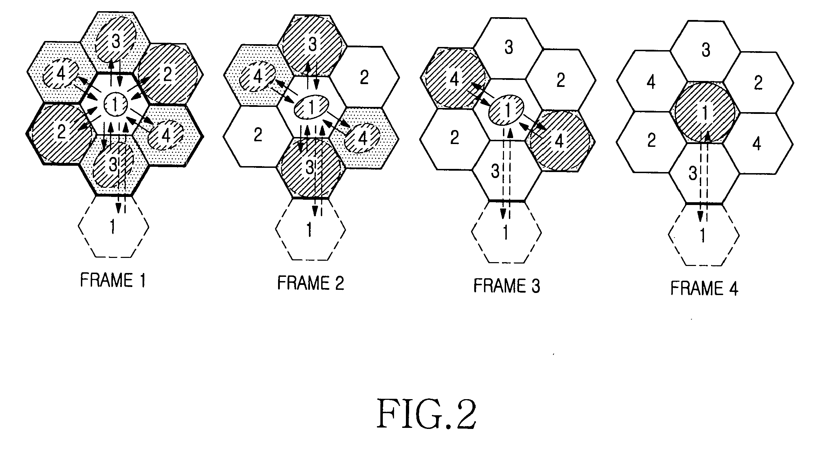

Mutual interference between cells and an area in which a subchannel can be allocated in an OFDMA communication system in accordance with an embodiment of the present invention will be described with reference to FIG 2.

FIG 2 is a block diagram illustrating mutual interference between cells and an area in which a subchannel can be allocated in the OFDMA communication system in accordance with an embodiment of the present invention.

Moreover, FIG. 2 illustrates a virtual interference and a service coverage area associated with each of the four frames when a subchannel is allocated in the first cell corresponding to the serving cell. Interference associated with the neighbor cells is considered, relatively low transmit power is allocated to subchannels for the first to third frames of the first cell, and relatively high interference from the neighbor cells occurs. Consequently, an SINR of a subchannel signal allocated for the first to third frames is lowered. In the first cell, only user terminals located in a service coverage area are assigned a subchannel. Here, the coverage area is an area in which an SINR of a subchannel signal received by a user terminal exceeds a preset threshold value, e.g., 0 dB.

As illustrated in FIG. 2, the coverage area of the first cell for the first frame is the smallest. The coverage area of the first cell for the second and third frames is larger than the coverage area for the first frame. The coverage area of the first cell for the fourth frame is the same as the entire area of the first cell. That is, in the fourth frame, the first cell can provide a stable service to all user terminals located therein. In this case, when the same equal amount of resources is allocated to each user terminals located in the first cell, the throughput of the user terminals located in the cell boundary area is reduced. Here, the resources may be subchannels, transmit power, and so on. To avoid the throughput loss of the user terminals located in the cell boundary area, an adaptive multi-user scheduling (AMS) scheme is used in which the scheduling is first performed for user terminals associated with small throughput and the fairness can be ensured such that user terminals can be assigned a subchannel in the fourth frame when they are not assigned a subchannel in the first to third frames.

The transmit power allocation scheme, i.e., power control scheme, will now be described. First, transmit power allocation for an interference-free frame will be described.

Because transmit power allocated to a subchannel for the fourth frame serving as the interference-free frame in the first cell corresponding to the serving cell never influences the neighbor cells, i.e., the second to fourth cells, the maximum transmit power can be allocated to the subchannel for the fourth frame. Accordingly, total transmit power available in the first cell is divided by the number of total subchannels, and the same transmit power is allocated to the subchannels. Here, assuming that the total transmit power is denoted by $P_T$ and the number of total subchannels is denoted by N , transmit power per subchannel is defined as shown in Equation 1.

$$P_0(n,t) = \frac{P_T}{N} \qquad\qquad \underline{\text{Equation 1}}$$

In Equation 1, $P_0(n,t)$ denotes transmit power allocated to the $n$-th subchannel in the serving cell at an arbitrary time point t. A cell index of the serving cell is set to 0 and cell indices of other cells except the serving cell are set to i.

Second, a transmit power allocation for an interfered frame will be described.

When subchannels for the first to third frames are allocated which are the same as subchannels allocated in previous super frame periods of the neighbor cells, collisions occur in subchannel allocation. To prevent the collisions from occurring in the subchannel allocation, a conventional dynamic channel allocation (DCA) scheme allocates a subchannel of a frequency band different from that of the subchannels allocated in the neighbor cells, such that collisions in the subchannel allocation can be prevented. However, in this scheme, subchannel resource efficiency is degraded.

Accordingly, the present invention allocates, in the serving cell, a subchannel of a frequency band that is the same as that of subchannels allocated to neighbor cells. Relatively low transmit power is allocated and the transmit power is controlled such that the subchannel allocated in the serving cell does not interfere with the subchannels allocated in the neighbor cells. In the serving cell, a subchannel is allocated only to user terminals located in a coverage area in which normal communication is enabled at the relatively low transmit power. Here, virtual transmit power denoted by $P^{(i)}_0(n,t)$ is defined for the $n$-th subchannel $(n,t)_0$ allocated in the serving cell at an arbitrary time point $t$ such that QoS degradation occurring due to the $n$-th subchannel $(n, t)_i$ allocated in the $i$-th cell at the arbitrary time point $t$ is considered.

Assuming that the $n$-th subchannel $(n, t)_i$ is allocated to the $k_i$-th user terminal, interference of the subchannel $(n, t)_0$ affecting the $k_i$-th user terminal is increased by $P^{(i)}_0(n, t)G_{0,k_i}$, where $G_{0,k_i}$ denotes a link gain from the serving BS to the $k_i$-th user terminal in the i-th cell, and $\gamma_{k_i}(n, t)$ is reduced to $\gamma'_{k_i}(n, t)$. Assuming that a modulation and coding scheme (MCS) level of $C_{k_i}(n, t)$ is allocated to the subchannel $(n,t)_i$, a probability of occurrence of an error significantly increases in the subchannel $(n,t)_i$ if $\gamma'_{k_i}(n, t) < \gamma_{th}(c_{k_i}(n, t))$. Here, $\gamma_{th}(c_{k_i}(n,t))$ is an SINR value satisfying a target packet error rate (PER) mapped to $C_{k_i}(n,t)$. As described above, a condition of $\gamma'_{k_i}(n, t) \geq \gamma_{th}(C_{k_i}(n, t))$ must be satisfied to prevent an increase in the probability of occurrence of an error in the subchannel $(n,t)_i$. When $G_{i,k_i}$ denotes a link gain from the i-th cell BS to the $k_i$-th user terminal and $\gamma_{k_i}(n,t) = P_i(n, t)G_{k_i}/I_{k_i}(n,t)$, the condition can be expressed as shown in Equation 2.

$$\gamma'_{k_i}(n,t) = \frac{P_i(n,t)G_{i,k_i}}{I_{k_i}(n,t) + P^{(i)}_0(n,t)G_{0,k_i}} \geq \gamma_{th}(c_{k_i}(n,t)) \qquad \underline{\text{Equation 2}}$$

In Equation 2, $P_i(n,t)$ denotes transmit power allocated to the subchannel $(n, t)$. $G_{i,k_i}$ denotes a link gain from the i-th cell to the $k_i$-th user terminal and $I_{k_i}(n, t)$ denotes interference power of the subchannel $(n,t)$. Accordingly, the virtual transmit power $P^{(i)}_0(n,t)$ is defined as shown in Equation 3.

$$P^{(i)}_0(n,t) \leq \frac{P_i(n,t)G_{i,k_i}}{G_{0,k_i}}\left(\frac{1}{\gamma_{th}(c_{k_i}(n,t))} - \frac{1}{\gamma_{k_i}(n,t)}\right) \qquad \underline{\text{Equation 3}}$$

The above-described process is repeated for not only the $i$-th cell, but also all cells in which the subchannel $(n,t)$ can be allocated. Consequently, the minimum virtual transmit power $P^{(i)}_0(n,t)$ is allocated as the maximum transmit power capable of being allocated to the subchannel $(n,t)$. This can be expressed by Equation 4.

$$P_0(n,t) = \min_i P^{(i)}_0(n,t) \qquad \underline{\text{Equation 4}}$$

On the other hand, when a neighbor cell in which the subchannel $(n, t)$ is allocated is absent or the subchannel transmit power, computed by Equation 4, $P_0(n,t) \geq P_T/N$, the subchannel $(n, t)$ for the interference-free frame is assigned a minimum virtual transmit power $P_0(n, t) = P_T / N$ as described above.

The transmit power allocation for the interference-free frame and the interfered frame has been described above. Next, interference computation from the interference-free frame and the interfered frame will be described. First, the interference computation from the interference-free frame will be described.

When only one tier is considered in the cellular communication system as illustrated in FIG. 2, a subchannel allocated for the fourth frame in the first cell is not affected by interference. However, when cells of at least two tiers are considered, cells with allocated subchannels equal to a subchannel of the first cell are present and the allocated subchannels of the cells equal to the subchannel of the first cell interfere with the subchannel of the first cell, it is extremely difficult to predict an amount of interference, and an average interference amount is reflected in a state in which subchannel allocation in the neighbor cells is assumed as random subchannel allocation. Each user terminal measures the average interference amount from the fourth frame and feeds backs a measure to the first cell. When the average interference amount measured by the user terminal is defined by $I^{(f4)}_{k0}$, an interference amount of each subchannel is expressed as shown in Equation 5.

$$I_{k_0}(n,t) = I_{k_0}^{(f4)}$$ <div style="text-align:right">**Equation 5**</div>

Second, the interference computation from the interfered frame will be described.

The interfered frame is affected by not only interference from the second to fourth cells corresponding to the cells neighboring to the first cell, but also interference from the cells with the allocated subchannels equal to the subchannel of the first cell when cells of at least two tiers are considered. An amount of interference from the second to fourth cells is equal to a total amount of interference $\Sigma_{i\in I}P_i(n,t)G_{i,k_0}$ from subchannels allocated in the second to fourth cells. Here, $I = \{i \mid i \neq j \bmod 4, i, j \text{ is cell index}\}$ and indicates neighbor cells with allocated subchannels different from a subchannel of the first cell. $G_{i,k_0}$ denotes a link gain from the $i$-th cell to user terminal $k_0$ of the serving cell. $P_i(n, t)$ denotes transmit power allocated to the subchannel $(n, t)$ and can be acquired using subchannel power allocation information acquired from the neighbor cells through a wired network. The amount of interference from the cells with the allocated subchannels equal to a subchannel of the first cell uses a value measured from the fourth frame. Accordingly, a total subchannel interference amount is computed by a sum of the amount of interference from the second to fourth cells and the amount of interference from the cells with the allocated subchannels equal to the subchannel of the first cell that is measured from the fourth frame. This can be expressed as shown in Equation 6.

$$I_{k_0}(n,t) = \sum_{i\in I} P_i(n,t)G_{i,k_0} + I_{k_0}^{(f4)}$$ <div style="text-align:right">**Equation 6**</div>

The interference computation from the interference-free frame and the interfered frame has been described above. Next, subchannel SINR estimation will be described.

First, the conventional subchannel SINR estimation in the case where a load of the OFDMA communication system is not equal to a full load will be described.

Because a subchannel interference amount differs according to subchannel allocation in neighbor cells, an amount of subchannel interference estimated using subchannel allocation information of the neighbor cells is used. That is, received power of the subchannel $(n,t)$ can be computed using the maximum power value $P_0(n, t)$, a link gain $G_{0,k_0}$ from the serving cell to mobile station subscriber (MSS) $k_0$ and an average channel gain $\alpha_{k_0}(n, t)$ between subcarriers configuring the subchannel $(n,t)$. Here, assuming that the channel gain is $H_{k_0,n}$ and the number of subcarriers configuring the subchannel $(n, t)$ is $N_s$, $\alpha_{k_0}(n, t) = \Sigma_{j\in n}|H_{k_0,j}|/N_5$. Accordingly, an SINR of the subchannel $(n,t)$ can be estimated as shown in Equation 7.

$$\gamma_{k_0}(n,t) = \frac{P_0(n,t)G_{0,k_0}\alpha_{k_0}^2(n,t)}{I_{k_0}(n,t)}$$ <div style="text-align:right">**Equation 7**</div>

Second, the subchannel SINR estimation in the case where the load of the OFDMA communication system is the full load will be described.

When the subchannel interference amount is estimated in the case where the load of the cellular communication system is the full load, it cannot be assumed that the same interference affects all subchannels. Accordingly, each MSS estimates only an average interference amount $I_{k0}$ and feeds back an estimate (i.e., a fed-back estimate) to the serving BS. Equation 8 is derived by rewriting Equation 7 using the fed-back estimate.

$$\gamma_{k_0}(n,t) = \frac{P_0(n,t)G_{0,k_0}\alpha_{k_0}^2(n,t)}{I_{k_0}}$$ <div style="text-align:right">**Equation 8**</div>

The subchannel SINR estimation has been described above. Next, a subchannel and bit allocation scheme will be described.

First, when an adaptive modulation and coding (AMC) scheme is applied to the OFDMA communication system, user terminals located in the cell boundary area may not transmit bits although an actual subchannel is allocated because an SINR of a subchannel signal is very low. When the actual subchannel is allocated but the bit transmission is impossible, subchannel resources are wasted. Accordingly, it is efficient that subchannels are allocated only to user terminals with the average SINR of more than the preset minimum SINR using the AMC scheme. In the present invention, when the subchannels are allocated only to the user terminals with the average SINR of more than the preset minimum SINR using the AMC scheme, they can be allocated to user terminals located in different coverage areas on a frame-by-frame basis as illustrated in FIG. 2.

When the subchannels are allocated, the minimum threshold SINR is compared with the average SINRs of the user terminals in each frame and an AMC MSS set is defined as shown in Equation 9. Here, the minimum threshold SINR can be defined such that it can satisfy a target outage probability.

$$V = \left\{ k \,\middle|\, \bar{\gamma}_k \geq \gamma_{\min} \right\}$$ 

<u>Equation 9</u>

In Equation 9, $\bar{\gamma}_k = E[\gamma_k\,(n,\,t)]$ . The subchannel allocation and scheduling scheme is determined by considering the fairness as described above. Because average SINRs of the user terminals differ according to frames, the number of AMC user sets also differs according to frames. Even when the fairness is considered, the number of user terminals to which optimum scheduling in which the minimum throughput is greatest is applied, differs according to frames.

To estimate interference in which the transmitted power of the subchannel allocated to the serving cell affects a user terminal of a neighbor cell, a link gain $G_{0,k_j}$ from the serving cell to the user terminal of the neighbor cell is required. To estimate an amount of interference from a subchannel allocated in the neighbor cell affecting the user terminal of the serving cell, a link gain $G_{i,k_{0j}}$ from the neighbor cell to the user terminal of the serving cell is required. When MSSs located in the cell boundary area perform a handover, they estimate the link gain to the neighbor cell through a ranging channel for cell selection. All user terminals periodically perform a ranging operation for the neighbor cell using the above-described scheme. The user terminals not only can identify a link gain from the serving cell to the user terminals of the neighbor cell, but also can identify a link gain from the MSSs located in the serving cell to the neighbor cell when link gain information is generated in the form of a database and is sent to the neighbor cell. Because a variation rate of the link gain is low, the complexity of the OFDMA communication system does not increase when the user terminals perform the ranging operation during a relatively long period.

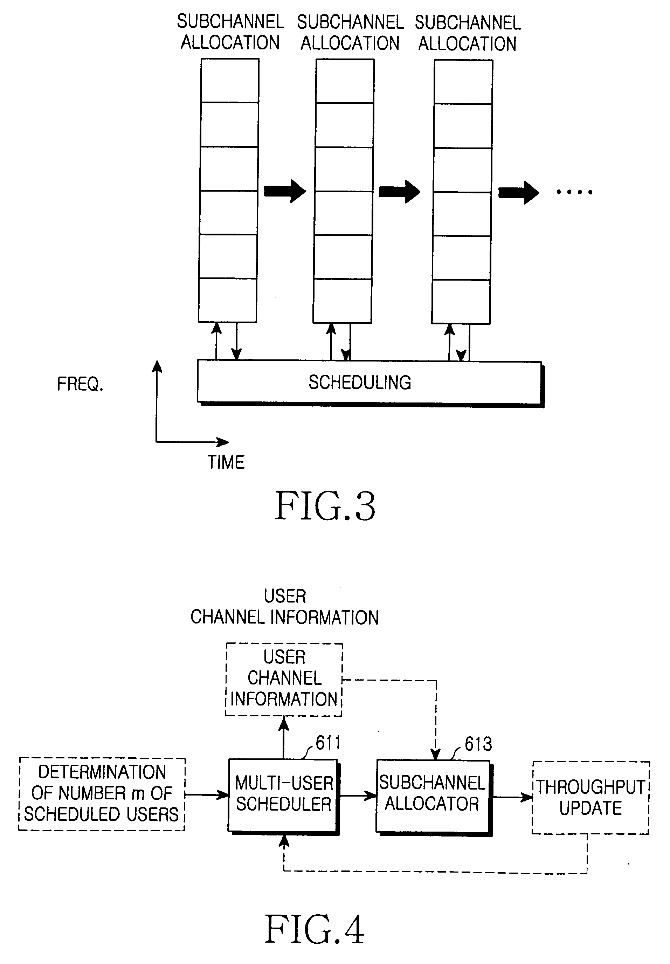

The present invention proposes the AMS scheme ensuring QoS. The AMS scheme proposed in the present invention improves the throughput through a multi-user diversity gain while satisfying a maximum-minimum (max-min) fairness for the downlink. Because the OFDMA communication system is inherently different from the CDMA communication system, and uses a long symbol length and multiple carriers, the channel gain differs according to subchannels. An associated subchannel is allocated to the user terminal associated with the highest channel gain in each subchannel, such that the multi-user diversity gain is obtained. The AMS scheme proposed in the present invention will be described with reference to FIG. 3.

FIG. 3 is a block diagram illustrating the AMS scheme in accordance with an embodiment of the present invention.

Referring to FIG. 3, user terminals associated with a preset scheduling condition are selected from a plurality of user terminals of the OFDMA communication system, and subchannels are allocated to the selected user terminals. Here, the throughput indicates an amount of data that each user terminal receives through service in a preset unit time.

Next, a structure of a transmitter for performing the AMS scheme in accordance with an embodiment of the present invention will be described with reference to FIG. 4, which is a block diagram illustrating a structure of a transmitter for performing the AMS scheme in accordance with an embodiment of the present invention.

Referring to FIG 4, the transmitter is configured by a multi-user scheduler 611 and a subchannel allocator 613. The multi-user scheduler 611 selects user terminals based on preset scheduling conditions from a plurality of user terminals of the OFDMA communication system, and sends subchannel information and SINR information about the selected user terminals to the subchannel allocator 613. The subchannel allocator 613 allocates subchannels mapped to information about the selected user terminals.

On the other hand, because the user terminals use wired channels with the same channel characteristics in the conventional wired communication system, fair scheduling is performed while considering packet characteristics, i.e., the packet length or burstness, as in a weighted fair queuing (WFQ) scheduler. However, the wireless communication system has a variable channel state due to distance attenuation, shadowing, Rayleigh fading, and so on according to an area in which each user terminal is located. To improve the throughput, a link adaptive scheme such as the AMC scheme is used and a modulation scheme and a coding rate are variably determined according to channel state. Even when the same resources are allocated, the throughput is different.

Here, all user terminals must transmit data having the same QoS level. When scheduling for one user terminal is considered, the user terminal selected for scheduling in the $t$-th time slot is expressed as shown in Equation 10.

$$\hat{k}(t+1) = \underset{k \in \{1,K,K\}}{\arg\min} R_k(t) \qquad \text{Equation 10}$$

In Equation (10), $R_k(t)$ denotes the number of bits, i.e., throughput, allocated to *the k* -th user terminal per unit time during the past time window $T_c$. The throughput of the user terminal selected using Equation 10 is updated as shown in Equation 11.

$$R_k(t+1) = \left(1 - \frac{1}{T_c}\right)R_k(t) + \frac{1}{T_c}B_k(t), \quad if \quad k = \hat{k}$$

$$R_k(t+1) = \left(1 - \frac{1}{T_c}\right)R_k(t), \quad if \quad k \neq \hat{k} \qquad \text{Equation 11}$$

In Equation 11, $B_k^{\hat{}}(t)$ denotes the number of bits allocated to the $\hat{k}$-th user terminal selected for scheduling in the $t$ -th time slot.

As described above, the user terminal associated with the lowest throughput is selected to increase its throughput, such that the minimum throughput increases. As a Time window $T_c$ increases, the minimum throughput converges to an average value between throughputs of all user terminals, i.e., the average throughput. If the throughputs of all the user terminals converge to the average throughput, it means that the throughputs of all the user terminals are the same as each other and the max-min fairness is satisfied.

In contrast, when the user terminals must transmit data in different QoS levels and scheduling for one user terminal is performed, the user terminal selected for scheduling in the $t$-th time slot is expressed as shown in Equation 12.

$$\hat{k}(t+1) = \underset{k \in \{1,K,K\}}{\arg\min} R_k(t) / \phi_k \qquad \text{Equation 12}$$

In Equation 12, $\phi_k$ denotes a QoS parameter of the k -th user terminal. The QoS parameter $\phi_k$ is expressed in the form of a weight based on a ratio of a requested data rate or delay constraint of each user terminal. For example, if the required data rate of user 1 is 100kbps and that of user 2 is 200kbps, $\phi_1=1, \phi_2=2$. The QoS parameter can be determined proportionally to the required data rate, which is similar to the weight used in the WFQ. This corresponds to the case where $R_k'(t)=R_k(t)/\phi_k$ in Equation 10. As the Time window $T_c$ increases for the $k$ -th user terminal and the $l$-th user terminal, a relation of $R_k/\phi_k=R_l/\phi_l$, is established and a data rate ratio is determined by a QoS parameter ratio. If a data rate ratio is determined by a QoS parameter ratio, it indicates that the weighted max-min fairness is satisfied as in the WFQ.

The scheduling scheme for one user terminal can be extended to a plurality of user terminals. Next, the scheduling scheme for the plurality of user terminals will be described.

First, assuming that $m$ user terminals are selected from K user terminals and a set of user terminals selected in the $t$ -th time slot is denoted by $U(t)$, Equations 10 and 12 can be expressed as Equations 13 and 14 shown below.

$$U(t+1) = \left\{k \,\middle|\, k = \arg R_k^{(j)}(t), j \in \{1,K,m\}, k \in \{1,K,K\}\right\}, \quad \text{only} \quad \text{when} \quad \text{user}$$

terminals have the same QoS. $\qquad$ Equation 13

$$U(t+1) = \left\{ k \mid k = \arg R_k^{(j)}(t) / \phi_k^{(j)}, j \in \{1, \mathrm{K}, m\}, k \in \{1, \mathrm{K}, K\} \right\}, \text{ only when user}$$

terminals have different QoSs.                                    Equation 14

In Equations 13 and 14, $R_k^{(j)}(t)$ denotes the $j$-th minimum throughput in the $t$-th time slot, and $\phi^{(j)}_k$ denotes a QoS parameter of a user terminal with the j-th minimum throughput. The throughput for the selected $m$ user terminals is updated as shown in Equation 15.

$$R_k(t) = \left( 1 - \frac{1}{T_c} \right) R_k(t-1) + \frac{1}{T_c} B_k(t), \quad if \quad \hat{k} \in U(t)$$

$$R_k(t) = \left( 1 - \frac{1}{T_c} \right) R_k(t-1), \quad otherwise \qquad\qquad \text{Equation (15)}$$

To perform the scheduling for a plurality of user terminals and allocate subchannels as described above, a plurality of conditions must be considered. The conditions for performing the scheduling for the user terminals and allocating the subchannels will be described.

The subchannels must be allocated such that a total throughput is maximized at preset total transmit power for the plurality of user terminals selected for scheduling. In this case, the following conditions must be considered.

Condition 1: User terminals selected for scheduling must be assigned subchannels.
Condition 2: Complexity must be low such that realtime subchannel allocation is possible.
Condition 3: All user terminals must acquire the maximum multi-user diversity gain.

In the best channel selection scheme serving as the currently used channel selection scheme, a subchannel is not allocated to a user terminal with a low average SINR apart from the BS in a channel environment in which path loss and interference power differ according to the user terminal's locations. Because a subchannel is not allocated to a user terminal with a low SINR, Condition 1 in which the user terminals selected for scheduling must be assigned subchannels cannot be satisfied.

To satisfy Condition 1, it is preferred that the best channel selection scheme is modified and a relative best channel selection scheme for selecting a subchannel with the highest SINR value when an SINR of each subchannel is normalized to an average SINR is used. Here, the relative best channel selection scheme is a subchannel allocation scheme based on the relative best scheduling scheme when scheduling for user terminals is performed. This scheme maximizes the total throughput while satisfying proportional fairness.

In more detail, when the number of subchannels to be allocated is relatively large, a subchannel allocation ratio is almost equal between user terminals and all user terminals can obtain almost the same multi-user diversity gain in the relative best channel selection scheme. Because the relative best channel selection scheme is a selection scheme with a very low complexity, it can simultaneously satisfy the above-described conditions.

As described above, the relative best channel selection scheme selects a subchannel with the largest SINR value is selected when an SINR of each subchannel is normalized to an average SINR. This can be expressed as shown in Equation 16.

$$\hat{k}(n,t) = \arg \max_{k \in U(t)} \frac{\gamma_k(n,t)}{\bar{\gamma}_k} \quad for\ all\ n\ at\ slot\ t$$

$$\rho_{\hat{k}}(n,t) = 1$$

$$where\ \bar{\gamma}_k = E[\gamma_k(n,t)] \qquad\qquad \text{Equation 16}$$

In Equation 16, $\gamma_k(n,t)$ denotes an SINR of the $k$-th user terminal in the $n$-th subchannel of the $t$-th time slot, and $\rho_k(n,t)$ denotes an indicator indicating if the $n$-th subchannel of the $t$-th time slot has been allocated to the $k$-th user terminal. If $\rho_k(n,t) = 1$, it indicates that the subchannel has been allocated to the $k$-th user terminal. However, if $\rho_k(n, t) = 0$, it indicates that the subchannel has not been allocated to the k-th user terminal. One subchannel can be allocated only to one user terminal. That is, $\sum_{k=1}^{K} \rho_k(n,t) = 1$ *for all n,t.* $\bar{\gamma}_k$ denotes an average SINR in the $k$-th user terminal. U(t) denotes a set of scheduled user terminals in the $t$-th time slot. An SINR of a subchannel of each user terminal in the downlink can be estimated using transmit power, a channel gain of each subchannel and/or an average interference amount. After each subchannel is allocated to each user terminal, the largest number of bits capable of being allocated is set according to an SINR of the subchannel of the user terminal. This can be expressed as shown in Equation 17.

$$c_{\hat{k}}(n,t) = \arg \min_{c_{\hat{k}}(n,t)} (\gamma_{\hat{k}}(n,t) - \gamma_{th}(c_{\hat{k}}(n,t)))$$
<div align="right"><u>Equation 17</u></div>

In Equation 17, $c_{k_i}^{\wedge}(n,t)$ denotes an MCS level and $\gamma_{th}(C_{k_i}^{\wedge}(n, t))$ denotes an SINR threshold for satisfying a target PER in the MCS level $c_{k_i}^{\wedge}(n, t)$. Here, the number of bits allocated to the k-th user terminal selected in the $t$-th time slot can be expressed as shown in Equation 18.

$$B_k(t) = \sum_{n=1}^{N} b(c_{\hat{k}}(n,t))\rho_{\hat{k}}(n,t)$$
<div align="right"><u>Equation 18</u></div>

In Equation 18, $b(c_{k_i}^{\wedge}(n, t))$ denotes bits/subcarrier/symbol when the MCS level ($c_{k_i}^{\wedge}(n,t)$ is applied. In an ideally successive AMC scheme, the bits/subcarrier/symbol $b(c_{k_i}^{\wedge}(n,t))$ for a requested BER can be expressed as shown in Equation 19.

$$b(c_{\hat{k}}(n,t)) = \log_2(1 + \gamma_{\hat{k}}(n,t)/\Gamma),$$
$$where \ \Gamma = -\ln(5BER)/1.5$$
<div align="right"><u>Equation 19</u></div>

If $b_k = E[b(c_{k_i}^{\wedge}(n,t))]$ in Equation 19, $b_k$ can be approximated as shown in Equation 20.

$$b_k \approx \log_2(1 + \bar{\gamma}_k G(m)/\Gamma)$$
<div align="right"><u>Equation 20</u></div>

In Equation 20, $G(m)$ denotes a multi-user diversity gain, and is a ratio of an average SINR value between all subchannels of user terminals before subchannel allocation and an average SINR value between allocated subchannels. Consequently, $G(m)$ is an SINR gain according to the subchannel allocation. When the relative best channel selection scheme is used, subchannels can be asymptotically allocated to the user terminals in the same ratio and the same multi-user diversity gain can be obtained. A channel of each user terminal is an independent, identically distributed (i. i. d.) Rayleigh fading channel. When the number of subchannels is infinite, the multi-user diversity gain $G(m)$ can be expressed as shown in Equation 21.

$$G(m) = \sum_{u=1}^{m} 1/u$$
<div align="right"><u>Equation 21</u></div>

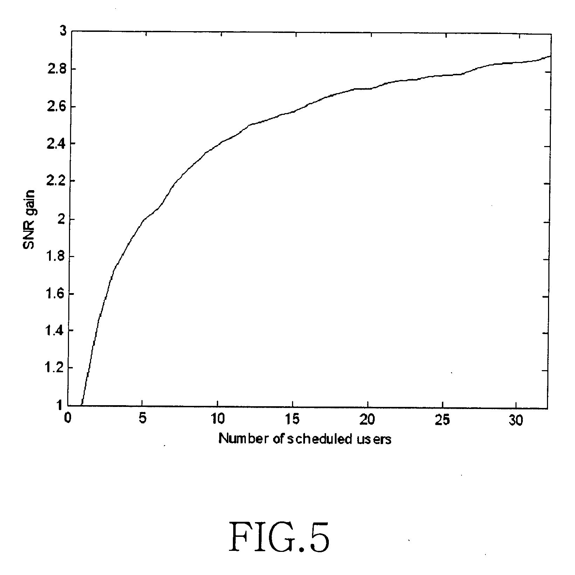

However, because the number of subchannels is finite and each subchannel of the user terminals is not an i. i. d. Rayleigh fading channel in the actual communication system, the multi-user diversity gain $G(m)$ is less than a value computed using Equation 21. When the number of user terminals to which subchannels are allocated increases, the multi-user diversity gain *G(m)* increases in proportion to the number of user terminals to which subchannels are allocated and a subchannel allocation ratio in which a subchannel is allocated to each user terminal in each time slot decreases. When the number of subchannels is 1,024 (under an assumption that the number of subcarriers configuring a subchannel is 1 as shown in FIG. 5), the number of total user terminals is 32, and an International Telecommunication Union-Radiocommunication Sector (ITU-R) pedestrian B channel model is used, the multi-user diversity gain *G(m)* for the number of scheduled user terminals is illustrated in FIG. 5.

A scheme for optimally setting the number of selected user terminals per slot to satisfy fairness and QoS when multi-user scheduling is performed is described below.

First, a convergence of $R_{min}$ *(t)* $\rightarrow$ $R_{avg}$ *(t)* according to an increase in a value of *t* when

$$R_{min}(t) = \min_{k \in \{1, K, K\}} R_k(t) \text{ and } R_{avg}(t) = \frac{1}{K} \sum_{k=1}^{K} R_k(t)$$ . Here, $R_{min}$ and $R_{avg}(t)$ are set as convergence values. In this case, the same throughput is provided to all user terminals, and the channel capacity $b_k$ is different between the user terminals because a channel state is different between the user terminals. Resources must be allocated to be in inverse proportion to the channel capacity $b_k$ . A resource allocation ratio for each user terminal is $\dfrac{1/b_k}{\sum_{l=1}^{K} 1/b_l}$ . The scheduling probability for each user terminal in one time slot is the same as the resource allocation ratio for each user terminal.

When scheduling operations are simultaneously performed for a plurality of user terminals, subchannels are almost equally allocated to the scheduled user terminals. Accordingly, the resource allocation ratio is the same as a product of a scheduling probability and a subchannel allocation ratio. As the number *m* of scheduled user terminals increases, a scheduling probability for each user terminal increases and the scheduling is first performed for a user terminal with the minimum throughput. Accordingly, the probability in which a user terminal, with a small channel capacity

$b_k$, is scheduled may be 1. That is, when it is defined that $k_{min}$ = arg $\underset{k}{\min}$ in $b_k$, $m^*$ scheduled user terminals are present such that $Pr(k_{min} \in U(i))$=1. When *m* < *m\**, the number of scheduled user terminal increases. The scheduling probability for each user terminal increases in proportion to the increased number of scheduled user terminals. However, because the subchannel allocation ratio decreases in inverse proportion to the increased number of scheduled user terminals, the resource allocation ratio is constantly maintained as $\dfrac{1/b_k}{\sum_{l=1}^{K} 1/b_l}$ . As the number of user terminals to which subchannels are allocated increases, the multi-user diversity gain and $R_{min}$ increase. However, when *m* > *m\**, the scheduling probability is $Pr(k_{min} \in U(i))$ = 1. Accordingly, $R_{min}$ = $R_{avg}$ *(t)* and the scheduling probability no longer increases and is the same as the scheduling probability in case of *m* = *m\** . Because only the subchannel allocation

ratio decreases, $R_{min}$ decreases. Because the resource allocation ratio is not maintained as $\dfrac{1/b_k}{\sum_{l=1}^{K} 1/b_l}$ , fairness cannot be satisfied.

When *m* = *m\**, $R_{min}$ has the largest value and fairness can be satisfied. Here, a time point when the scheduling probability $Pr(k_{min} \in U(i))$ = 1 must be found such that *m\** is computed. Because the scheduling probability is proportional to *m\**, it is defined as shown in Equation 22.

$$\Pr(k_{min} \in U(i)) = \frac{m^* / b_{k_{min}}}{\sum_{l=1}^{K} 1/b_l} = 1 \qquad\qquad \text{Equation 22}$$

When Equation 22 is arranged, *m\** is defined as shown in Equation 23.

$$m^* = \left\lfloor b_{k_{min}} \sum_{k=1}^{K} 1/b_k \right\rfloor \qquad\qquad \text{Equation 23}$$

However, because the channel capacity $b_k$ is a value increased according to the multi-user diversity gain $G(m)$ when $m$ increases as described in relation to Equation 20, it is difficult for $m^*$ as defined by Equation 23 to be directly computed. Accordingly, $m^*$ is set by a repeat operation as described below.

That is, assuming that the multi-user diversity gain $G(m)$ of each user terminal is 1, the number $m_{init}$ of initial user terminals can be computed as shown in Equation 24.

$$m_{init} = \left\lfloor b_{k_{min}} \sum_{k=1}^{K} 1/b_k \right\rfloor = \left\lfloor \log_2(1 + \bar{\gamma}_{k_{min}}/\Gamma) \sum_{k=1}^{K} 1/\log_2(1 + \bar{\gamma}_k/\Gamma) \right\rfloor$$

$$\text{Equation 24}$$

When the number $m_{init}$ of initial user terminals computed using Equation 24 is inserted into the multi-user diversity gain $G(m)$, the optimum number $m^*$ of user terminals can be computed using Equation 25.

$$m^* = \left\lfloor \log_2(1 + \bar{\gamma}_{k_{min}} G(m_{init})/\Gamma) \sum_{k=1}^{K} 1/\log_2(1 + \bar{\gamma}_k G(m_{init})/\Gamma) \right\rfloor \quad \text{Equation 25}$$

Because the multi-user diversity gain $G(m)$ is a function increasing in a log scale as illustrated in FIG. 5, the optimum number $m^*$ of user terminals can be sufficiently computed through only one repeat operation using Equation 25. It can be found that the optimum number $m^*$ of user terminals as defined in Equation 25 is affected by an SINR distribution of user terminals corresponding to the number of total user terminals, i.e., an average SINR value and a standard deviation.

On the other hand, when the user terminals receive data services with different QoS levels, they can receive services with the same QoS if $R_k'(t) = R_k(t)/\phi_k$. The optimum number $m^*$ of user terminals can be computed using Equations 24 and 25.

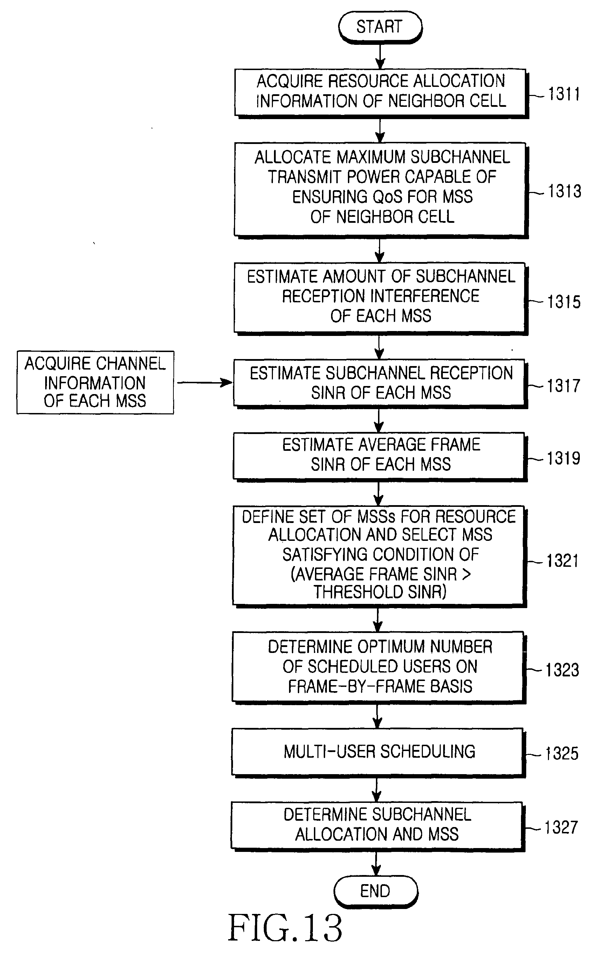

A process for scheduling, subchannel allocation, and subchannel transmit power allocation in accordance with an embodiment of the present invention will now be described with reference to FIG. 13.

FIG. 13 is a flow chart illustrating the process for scheduling, subchannel allocation, and subchannel transmit power allocation in accordance with an embodiment of the present invention.

Before FIG. 13 is described, it is noted that an MSS denotes a user terminal in FIG. 13. Referring to FIG. 13, a BS acquires resource allocation information of neighbor cells from the neighbor cells in step 1311 and proceeds to step 1313. Here, the resource allocation information of neighbor cells can be acquired through wired communication between BSs as described above. The BS allocates the maximum subchannel transmit power capable of ensuring QoS requested by user terminals located in the neighbor cells in step 1313 and proceeds to step 1315.

The BS estimates an amount of subchannel reception interference of each user terminal in step 1315 and proceeds to step 1317. The BS estimates a received SINR of a subchannel of each user terminal by using channel information of each user terminal in step 1317 and proceeds to step 1319. The BS estimates an average frame SINR of each user terminal in step 1319 and proceeds to step 1321.

The BS defines a set of user terminals to which resources are allocated on a frame-by-frame basis, i.e., selects MSSs capable of satisfying a condition that an average SINR between frames exceeds a threshold SINR, in step 1321, and then proceeds to step 1323. The BS determines the optimum number of scheduled users, i.e., the optimum number of user terminals, on the frame-by-frame basis in step 1323, and then proceeds to step 1325. The BS performs multi-user scheduling using the multi-user scheduling scheme as described above in step 1325 and then proceeds to step 1327. The BS determines subchannel allocation and an associated subscriber terminal using the above-described scheme in step 1327 and then ends the process.

A signal-to-noise ratio (SNR) gain according to the number of scheduled user terminals in accordance with an embodiment of the present invention will now be described with reference to FIG. 5, which is a graph illustrating SNR gain according to the number of scheduled user terminals in accordance with an embodiment of the present invention. FIG. 5, illustrates that the SNR gain increases as the number of scheduled user terminals increases.

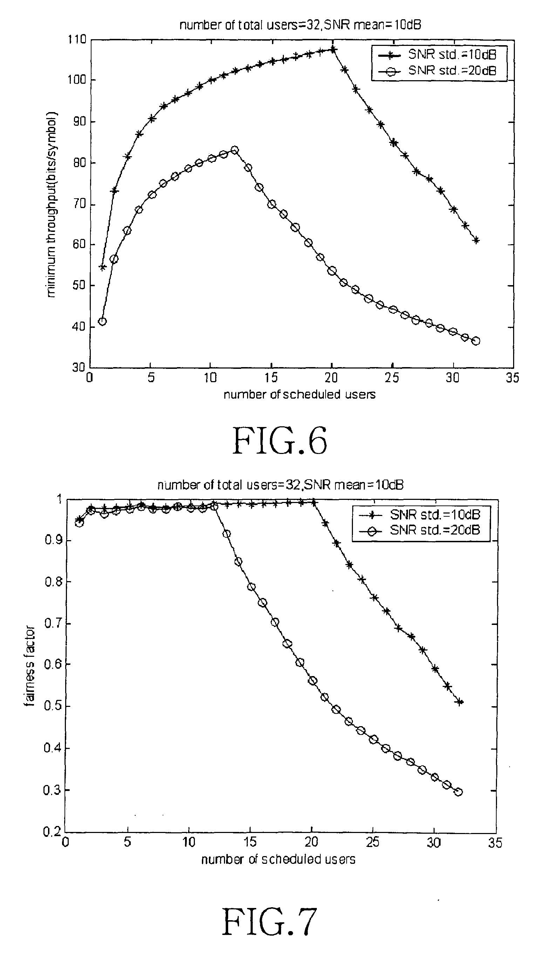

Next, characteristics of the minimum throughput according to the number of scheduled user terminals in accordance with an embodiment of the present invention will now be described with reference to FIG. 6, which is a graph illustrating the characteristics of the minimum throughput according to the number of scheduled user terminals in accordance with an embodiment of the present invention.

In FIG. 6, it is assumed that the number of subchannels of the OFDMA communication system is 1,024 (under an assumption that one subcarrier configures one subchannel), the number of total user terminals is one of 4 to 32, and a channel of each user terminal uses the ITU-R pedestrian B channel model.

FIG. 6, illustrates that the minimum throughput increases when the number of scheduled user terminals increases, and decreases when the number of user terminals is more than the optimum number $m^*$ of user terminals.

Characteristics of a fairness factor according to the number of scheduled user terminals in accordance with an embodiment of the present invention will now be described with reference to FIG. 7, which is a graph illustrating the characteristics of the fairness factor according to the number of scheduled user terminals in accordance with an embodiment of the present invention.

In FIG. 7, it is assumed that the number of subchannels of the OFDMA communication system is 1,024 (under an assumption that one subcarrier configures one subchannel), the number of total user terminals is one of 4 to 32, and a channel of each user terminal uses the ITU-R pedestrian B channel model. Here, the fairness factor is Minimum throughput/Mean Throughput. If the fairness factor = 1, it means that fairness is provided.

FIG. 7, illustrates that the fairness factor is maintained as 1 when the number of scheduled user terminals is less than the optimum number $m^*$ of user terminals, and is reduced to a value of less than 1 when the number of scheduled user terminals exceeds the optimum number $m^*$ of user terminals. The optimum number $m^*$ of user terminals is small when a SINR distribution (or a standard deviation) of a user terminal is large.

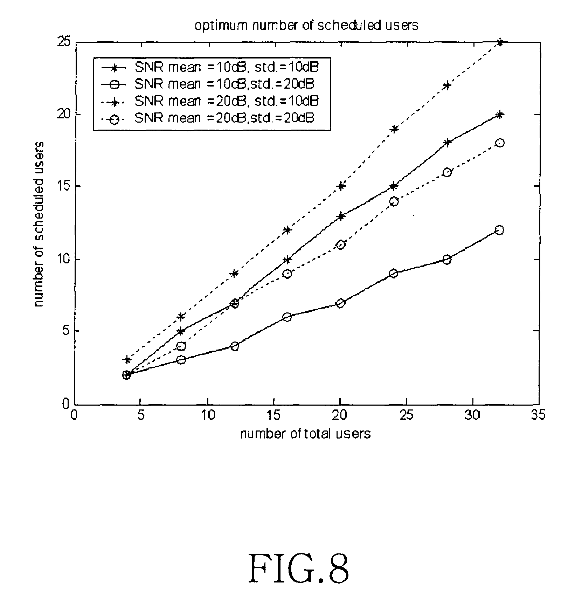

Characteristics of an SINR distribution and the optimum number $m^*$ of user terminals according to the number of total user terminals in accordance with an embodiment of the present invention will now be described with reference to FIG. 8, which is a graph illustrating the characteristics of the SINR distribution and the optimum number $m^*$ of user terminals according to the number of total user terminals in accordance with an embodiment of the present invention.

FIG. 8, illustrates that the optimum number $m^*$ of user terminals increases when an average of an SINR distribution increases and a standard deviation decreases.

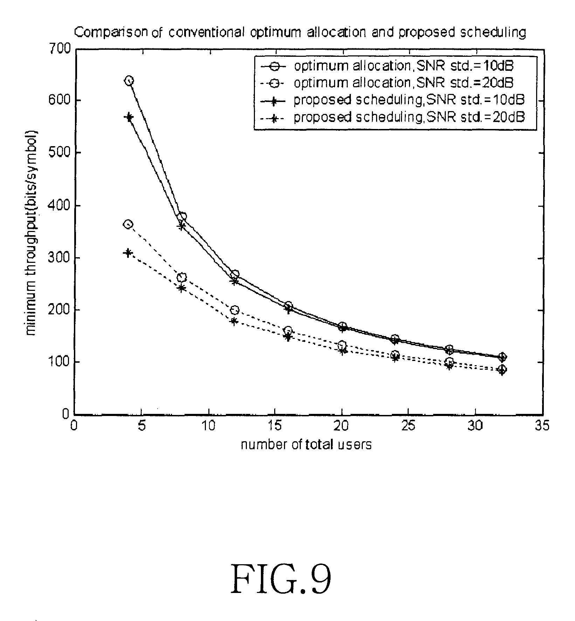

Characteristics of the minimum throughput compared between a conventional optimum subchannel allocation scheme and a proposed AMS scheme in accordance with an embodiment of the present invention will now be described with reference to FIG. 9, which is a graph illustrating the characteristics of the minimum throughput compared between the conventional optimum subchannel allocation scheme and the proposed AMS scheme in accordance with an embodiment of the present invention.

FIG. 9 illustrates the minimum throughput in the conventional optimum subchannel allocation scheme and the AMS scheme in which the optimum number $m^*$ of user terminals is applied in accordance with an embodiment of the present invention when an average of an SINR distribution is 10 dB. FIG 9, illustrates that the minimum throughput is almost the same between the conventional optimum subchannel allocation scheme and the AMS scheme in which the optimum number $m^*$ of user terminals is applied in accordance with the embodiment of the present invention. That is, it can be found that the efficiency of the AMS scheme is high because the AMS scheme using the optimum number $m^*$ of user terminals in accordance with the embodiment of the present invention has the minimum complexity and has almost the same minimum throughput as the conventional optimum subchannel allocation scheme.

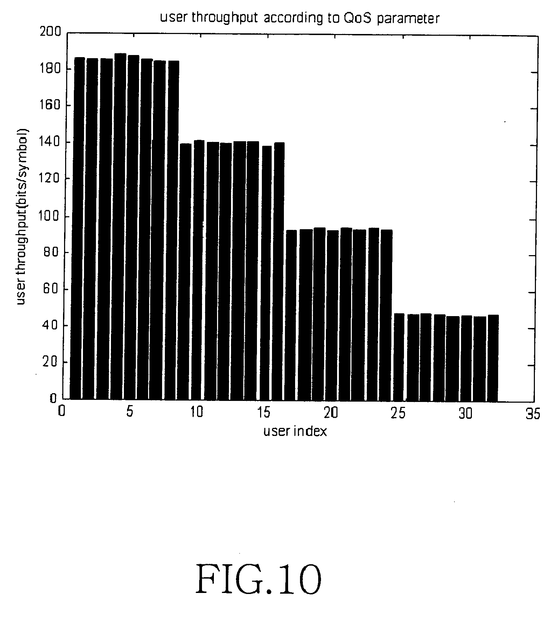

Throughput allocation according to a ratio of requested data amounts when ratios of data amounts requested by the user terminals are different in accordance with an embodiment of the present invention will now be described with reference to FIG. 10, which is a graph illustrating the throughput allocation according to a ratio of requested data quantity when user terminals request different ratios of data quantity in accordance with an embodiment of the present invention.

FIG. 10, illustrates that throughput is allocated according to a ratio of data quantity requested by user terminals when ratios of data amounts requested by the user terminals are different. In FIG 10, it is assumed that a ratio between data quantity requested by the user terminals is (User terminals 1 to 8):(User Terminals 9 to 16):(User Terminals 17 to 24):(User terminals 25 to 32) = 4:3:2:1.

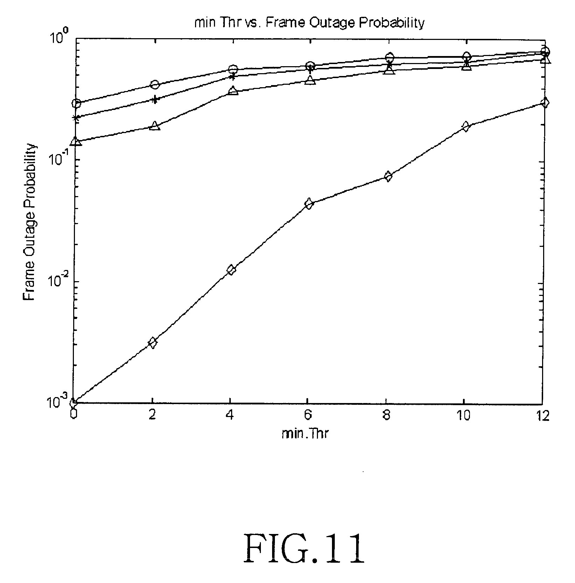

A relationship between the minimum threshold SINR and a frame outage probability in a multi-cell environment in accordance with an embodiment of the present invention will now be described with reference to FIG. 11, which is a graph illustrating the relation between the minimum threshold SINR and the frame outage probability in the multi-cell environment in accordance with an embodiment of the present invention.

Simulation environments applied in FIG. 11 are given as follows.

(1) Simulation tool: MATLAB

(2) Cell structure: 28 cells, wrap-around method

(3) User terminal distribution: 32/cell, uniform distribution

(4) Path-loss model: 37*log 10 (R) + 16.62 + shadowing (ITU, R in meter)

(5) Shadowing: STD = 10 dB, intercell correlation = 0.5

(6) Channel model: ITU-Pedestrian B

(7) Cell radius: 1 km

(8) Antenna: omni-directional antenna

(9) 100 % system load

(10) Target outage probability (Pr(Average SINR < Minimum Threshold SINR)): 0.1 (10 %)

(11) Band AMC standard application of IEEE 802.16e communication system

- FFT size: 1,024
- Used data tones: 768 (pilot tone exception)
- Subchannel size: 2 bins (16 subcarriers) x 3 symbols
- Assumption that all downlink sections use band AMC
- MCS (modulation + LDPC code)

| MCS level | MOD-code | Bits | Threshold SNR [dB] |
|---|---|---|---|
| MCS 1 | QPSK-1/8 | 0.25 | -1.98 |
| MCS 2 | QPSK-1/4 | 0.5 | 0.35 |
| MCS 3 | QPSK-1/2 | 1 | 3.06 |
| MCS 4 | 16 QAM-1/2 | 2 | 8.45 |
| MCS 5 | 16 QAM-3/4 | 3 | 11.65 |
| MCS 6 | 64 QAM-2/3 | 4 | 15.54 |
| MCS 7 | 64 QAM-5/6 | 5 | 19.04 |

In FIG. 11, "min. Thr" denotes the minimum threshold SINR, and the frame outage probability is measured while the minimum threshold SINR varies in the range of 0 [dB] to 12 [dB]. From FIG. 11, it can be found that interfered frames (Frames 1, 2 and 3) have the higher frame outage probability than an interference-free frame (Frame 4), and the frame outage probabilities of interfered frames are high in order of Frame 1 > Frame 2 > Frame 3.

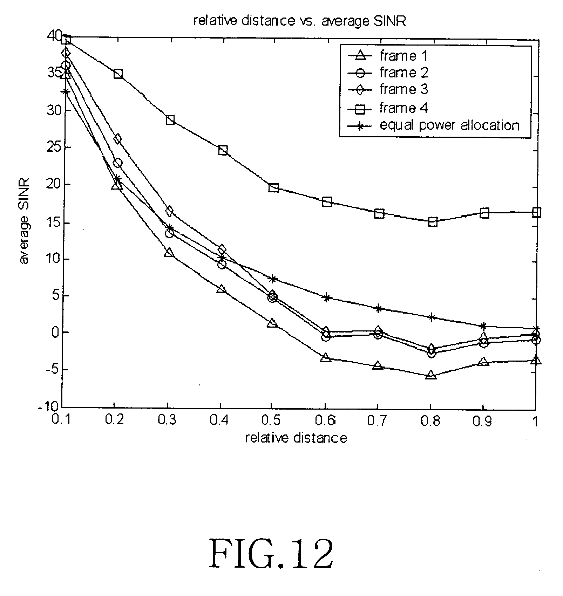

A performance comparison between a conventional subchannel transmit power allocation scheme and a proposed subchannel transmit power allocation scheme in accordance with an embodiment of the present invention will now be described with reference to FIG. 12, which is a graph illustrating a performance comparison between a conventional subchannel transmit power allocation scheme and a proposed subchannel transmit power allocation scheme in accordance with an embodiment of the present invention.

The conventional subchannel transmit power allocation scheme in FIG. 12 allocates the same transmit power to all subchannels without using the staggered frame structure. On the other hand, the proposed subchannel transmit power allocation scheme performs scheduling and subchannel allocation using the AMS scheme in accordance with an embodiment of the present invention.

FIG. 12 illustrates an average SINR according to a relative distance when a distance value of the cell boundary area is assumed to be equal to 1. When the proposed subchannel transmit power allocation scheme in accordance with the embodiment of the present invention is applied, it has a slightly lower average SINR in Frames 1, 2 and 3 but has a higher average SINR in Frame 4, as compared with the conventional subchannel transmit power allocation scheme.

Table 1 shows the minimum threshold SINR and cell capacity capable of satisfying the target outage probability when the target outage probability is 0.1 (10%).

It can be found that the number of user terminals using a low MCS level increases and therefore cell capacity is low, because the minimum threshold SINR is -3 dB in the conventional subchannel transmit allocation scheme. It is can be found that many user terminals use a relatively high MCS level and therefore cell capacity is very high, because the minimum threshold SINR is 8 [dB] in the proposed subchannel transmit power allocation scheme in accordance with an embodiment of the present invention. Table 2 shows the outage probability and cell capacity when the minimum threshold SINR is 0 dB. It can be found that the proposed subchannel transmit power allocation scheme in accordance with the embodiment of the present invention has a lower outage probability than the conventional subchannel transmit power allocation scheme. This is because the high SINR in Frame 4 is provided in the cell boundary area. In this case, it can be found that the proposed subchannel transmit power allocation scheme in accordance with the embodiment of the present invention has almost the same cell capacity as the conventional subchannel transmit power allocation scheme. This is because both the schemes select only user terminals with a value of more than the threshold SINR to allocate resources to the selected user terminals. The reason why the proposed subchannel transmit power allocation scheme in accordance with the embodiment of the present invention has almost the same cell capacity as the conventional subchannel transmit power allocation scheme is that the outage probability is small and as the number of selected user terminals increases, an increase in the multi-user diversity gain of a subchannel is realized.

**Table 1**

| | Conventional subchannel transmit power allocation scheme | Proposed subchannel transmit power allocation scheme |
|---|---|---|
| Threshold SINR | -3 dB | 8 dB |
| Cell capacity | 3.429 Mbps | 11.455 Mbps |

Table 2

| | Conventional subchannel transmit power allocation scheme | Proposed subchannel transmit power allocation scheme |
|---|---|---|
| Outage probability | 0.3021 | 0.0010 |
| Cell capacity | 5.248 Mbps | 5.963 Mbps |

As is apparent from the above description, the present invention can allocate subchannels and transmit power such that intercell interference can be minimized in an OFDMA communication system. Moreover, the present invention can maximize the throughput while allocating subchannels and transmit power such that the intercell interference can be minimized. Moreover, the present invention can guarantee QoS of each user terminal is maintained and improve the performance of the entire system while maximizing the throughput.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims.

**Claims**

1. A method for allocating resources in a serving cell of an orthogonal frequency division multiple access, OFDMA, communication system having a plurality of cells, the OFDMA communication system dividing an entire frequency band into a plurality of subcarrier bands in each cell and having subchannels that are a set of a preset number of subcarrier bands, respectively, the method comprising the steps of:

   predicting interference from neighbor cells of the plurality of cells;
   determining a time interval in which interference is absent and a time interval in which the interference is present according to the interference predicted from the neighbor cells;
   equally distributing and allocating transmission power to subchannels capable of being allocated in the time interval in which the interference is absent; and
   adjusting and allocating transmission power for the subchannels capable of being allocated such that substantial inference to the neighbor cells does not occur in the time interval in which the interference is present.

2. The method of claim 1, wherein the time interval in which the interference is absent is a time interval in which subchannels are not allocated in any of the neighbor cells.

3. The method of claim 1, wherein the time interval in which the interference is present is a time interval in which a subchannel is allocated in at least one cell of the neighbor cells.

4. The method of one of claims 1 to 3, further comprising the step of:

   allocating the subchannels only to user terminals capable of providing a signal-to-interference-plus-noise-ratio, SINR, which is greater than a predetermined value in the time interval in which the interference is present.

5. The method of one of claims 1 to 4, wherein the step of predicting the interference from the neighbor cells of the plurality of cells includes:

   predicting an average interference amount, the average interference amount being a summation of interference from the plurality of neighbor cells in the time interval in which the interference is absentand representing an average of interference amounts which are received from user terminals.

6. The method of one of claims 1 to 4, wherein the step of predicting the interference from the neighboring cells of the plurality of cells includes:

   adding a first average interference amount, representing an average between interference amounts received from user terminals of the neighboring cells in the time interval in which the interference is present, to a second average interference amount, representing an average between interference amounts received from user terminals of the serving cell in the time interval in which the interference is absent; and
predicting the interference from the neighboring cells.

7. An apparatus for allocating resources in a serving cell of an orthogonal frequency division multiple access, OFDMA, communication system, the system having a plurality of cells the OFDMA communication system dividing an entire frequency band into a plurality of subcarrier bands in each cell, and having subchannels that are a set of a preset number of subcarrier bands, respectively, the apparatus comprising:

a BS for predicting interference from neighboring cells of the plurality of cells, determining a time interval in which interference is absent and a time interval in which the interference is present according to the interference predicted from the neighboring cells, equally distributing and allocating transmission power to subchannels capable of being allocated in the time interval in which the interference is absent and adjusting and allocating transmit power for the subchannels capable of being allocated such that substantial inference to the neighbor cells does not occur in the time interval in which the interference is present; and
a plurality of user terminals for receiving a signal transmitted from the BS and feeding back a signal-to-interference-plus-noise-ratio, SINR, of the received signal to the BS.

8. The apparatus of claim 7, wherein the time interval in which the interference is absent is a time interval in which subchannel are not allocated in any of the neighboring cells.

9. The apparatus of claim 7, wherein the time interval in which the interference is present is a time interval in which a subchannel is allocated in at least one cell of the neighboring cells.

10. The apparatus of one of claims 7 to 9, wherein the BS allocates the subchannels only to user terminals capable of providing an SINR which is greater than a predetermined value in the time interval in which the interference is present.

11. The apparatus of one of claims 7 to 10, wherein the BS predicts an average interference amount as an amount of interference from the plurality of neighboring cells in the time interval in which the interference is absent, the average interference amount representing an average between interference amounts fed received from user terminals.

12. The apparatus of claim 11, wherein the BS adds a first average interference amount, representing an average between interference amounts received from user terminals of the neighboring cells in the time interval in which the interference is present, to a second average interference amount, representing an average between interference amounts received from user terminals of the serving cell in the time interval in which the interference is absent, and predicts the interference from the neighboring cells.

13. A method for allocating resources in a serving cell of an orthogonal frequency division multiple access, OFDMA, communication system having a plurality of cells, the OFDMA communication system divides an entire frequency band into a plurality of subcarrier bands in each cell, and having subchannels that are a set of a preset number of subcarrier bands, respectively, the method comprising the steps of:

selecting user terminals satisfying predetermined conditions to which subchannels can be allocated, from user terminals with a minimum throughput among a plurality of user terminals in an arbitrary time interval; and
allocating the subchannels to the selected user terminals.

14. The method of claim 13, wherein the conditions indicate that a user terminal which has not been allocated a subchannel is absent among the selected user terminals, complexity of realtime subchannel allocation is low and all the plurality of user terminals obtain a maximum multi-user diversity gain.

15. The method of claim 13 or 14, further comprising the steps of:

predicting interference from neighbor cells of the plurality of cells; and
determining a time interval in which interference is absent and a time interval in which the interference is present according to the predicted interference predicted from the neighboring cells.

16. The method of claim 15, further comprising the steps of:

equally distributing and allocating transmit power to the plurality of user terminals in the time interval in which the interference is absent; and

adjusting and allocating transmit power for the plurality of user terminals such that inference to the neighboring cells does not occur in the time interval in which the interference is present.

17. The method of claim 15 or 16, wherein the time interval in which the interference is absent is a time interval in which subchannel are not allocated in any of the neighbor cells.

18. The method of claim 17, wherein the time interval in which the interference is present is a time interval in which a subchannel is allocated in at least one cell of the neighboring cells.

19. The method of one of claims 15 to 18, further comprising the step of:

allocating the subchannels only to user terminals capable of providing a signal-to-interference-plus-noise-ratio, SINR, which is greater than a predetermined value in the time interval in which the interference is present.

20. The method of one of claims 15 to 19, wherein the step of predicting the interference from the neighboring cells of the plurality of cells includes:

predicting an average interference amount the average interference amount being a summation of interference from the plurality of neighboring cells in the time interval in which the interference is absent and representing an average between interference amounts received from user terminals.

21. The method of one of claims 15 to 19, wherein the step of predicting the interference from the neighboring cells of the plurality of cells includes:

adding a first average interference amount, representing an average between interference amounts received from user terminals of the neighboring cells in the time interval in which the interference is present, to a second average interference amount, representing an average between interference amounts received from user terminals of the serving cell in the time interval in which the interference is absent; and
predicting the interference from the neighboring cells.

22. An apparatus for allocating resources in a serving cell of an orthogonal frequency division multiple access, OFDMA, communication system OFDMA communication system having a plurality of cells, the OFDMA communication system dividing an entire frequency band into a plurality of subcarrier bands in each cell and having subchannels that are a set of a preset number of subcarrier bands, respectively, the apparatus comprising:

a BS for selecting user terminals satisfying predetermined conditions to which subchannels can be allocated, from user terminals with a minimum throughput among a plurality of user terminals in an arbitrary time interval, and allocating the subchannels to the selected user terminals; and
the plurality of user terminals for receiving a signal transmitted from the BS and feeding back a signal-to-interference-plus-noise-ratio, SINR, of the received signal to the BS.

23. The apparatus of claim 22, wherein the conditions indicate that a user terminal to which has not been allocated a subchannel is absent among the selected user terminals, complexity of realtime subchannel allocation is low and the plurality of user terminals obtain a maximum multi-user diversity gain.

24. The apparatus of claim 22 or 23, wherein the BS predicts interference from neighbor cells of the plurality of cells, and determines a time interval in which interference is absent and a time interval in which the interference is present according to the interference predicted from the neighboring cells.

25. The apparatus of claim 24, wherein the BS equally distributes and allocates transmission power to the plurality of user terminals in the time interval in which the interference is absent, and adjusts and allocates transmit power for the plurality of user terminals such that substantial inference to the neighbor cells does not occur in the time interval in which the interference is present.

26. The apparatus of claim 24 or 25, wherein the time interval in which the interference is absent is a time interval in which subchannel are not allocated in any of the neighboring cells.

27. The apparatus of claim 26, wherein the time interval in which the interference is present is a time interval in which a subchannel is allocated in at least one cell of the neighboring cells.

28. The apparatus of one of claims 24 to 27, wherein the BS allocates the subchannels only to user terminals capable of providing an SINR which is greater than a predetermined value in the time interval in which the interference is present.

29. The apparatus of one of claims 24 to 28, wherein the BS predicts an average interference amount as an amount of interference from the plurality of neighbor cells in the time interval in which the interference is absent, the average interference amount representing an average between interference amounts received from user terminals.

30. The apparatus of one of claims 24 to 29, wherein the BS adds a first average interference amount, representing an average between interference amounts fed back from user terminals of the neighboring cells in the time interval in which the interference is present, to a second average interference amount, representing an average between interference amounts received from user terminals of the serving cell in the time interval in which the interference is absent, and predicts the interference from the neighboring cells.

FIG.1

FRAME 1      FRAME 2      FRAME 3      FRAME 4

FIG.2

EP 1 653 762 A2

SUBCHANNEL        SUBCHANNEL        SUBCHANNEL
ALLOCATION        ALLOCATION        ALLOCATION

FREQ.

SCHEDULING

TIME

# FIG.3

USER
CHANNEL INFORMATION

USER
CHANNEL
INFORMATION

DETERMINATION
OF NUMBER m OF
SCHEDULED USERS

611
MULTI-USER
SCHEDULER

613
SUBCHANNEL
ALLOCATOR

THROUGHPUT
UPDATE

# FIG.4

FIG.5

FIG.6

FIG.7

FIG.8

Comparison of conventional optimum allocation and proposed scheduling

minimum throughput(bits/symbol)

number of total users

—⊖— optimum allocation,SNR std.=10dB
--⊖-- optimum allocation,SNR std.=20dB
—✶— proposed scheduling,SNR std.=10dB
--✶-- proposed scheduling,SNR std.=20dB

FIG.9

FIG.10

FIG.11

relative distance vs. average SINR

**FIG.12**

START

ACQUIRE RESOURCE ALLOCATION
INFORMATION OF NEIGHBOR CELL ~1311

ALLOCATE MAXIMUM SUBCHANNEL
TRANSMIT POWER CAPABLE OF
ENSURING QoS FOR MSS
OF NEIGHBOR CELL ~1313

ESTIMATE AMOUNT OF SUBCHANNEL
RECEPTION INTERFERENCE
OF EACH MSS ~1315

ACQUIRE CHANNEL
INFORMATION
OF EACH MSS

ESTIMATE SUBCHANNEL RECEPTION
SINR OF EACH MSS ~1317

ESTIMATE AVERAGE FRAME
SINR OF EACH MSS ~1319

DEFINE SET OF MSSs FOR RESOURCE
ALLOCATION AND SELECT MSS
SATISFYING CONDITION OF
(AVERAGE FRAME SINR >
THRESHOLD SINR) ~1321

DETERMINE OPTIMUM NUMBER
OF SCHEDULED USERS ON
FRAME-BY-FRAME BASIS ~1323

MULTI-USER SCHEDULING ~1325

DETERMINE SUBCHANNEL
ALLOCATION AND MSS ~1327

END

FIG.13